# EUROPEAN PATENT APPLICATION

(11) **EP 4 778 378 A1**
(43) Date of publication of application: **22.07.2026**
(21) Application number: 25216176.5
(22) Date of filing: 17.11.2025
(51) Int. Cl.: A01D 34/00, A01D 34/44, A01D 34/66

(54) **MOWER AND METHOD OF OPERATING SUCH**

(30) Priority: 17.01.2025 US 202519027110
(71) Applicant: Deere & Company, Moline, IL 61265 (US)
(72) Inventor: Chamberlin, Jeff, Mannheim (DE); Brunetti, Angela, Mannheim (DE); Waters, Alexander, Mannheim (DE)
(74) Representative: Reichert, Christian

(57) **Abstract**

A mower (100) is disclosed. The mower (100) comprising: a first cutting unit row (134) including at least a first cutting unit (106, 108), said first cutting unit (106, 108) movable between a plurality of first cutting unit positions; a second cutting unit row (136) including at least a second cutting unit (110), said second cutting unit (110) movable between a plurality of second cutting unit positions, and wherein said first and second cutting units (106, 108, 110) are staggered; a controller (142) including at least one memory (144) and at least one processor (146), said controller (142) operable to: detect a request to move said first and second cutting units (106, 108,110) to different first and second cutting unit positions; command said first cutting unit (106, 108) to move to said different first cutting unit position; determine a distance traveled by said mower (100) after said first cutting unit (106, 108) is moved to said different first cutting unit position; and command said second cutting unit (110) to move to said different second cutting unit position such that an approximately straight mow line is created across a total desired cutting width (140) of said mower (100). Furthermore, a method (200) of controlling such a mower (100) is disclosed.

## Description

### TECHNICAL FIELD

The present disclosure relates to grass mowing machines, and more specifically to systems, devices, and methods for grass mowing machines having multiple rows of one or more cutting units.

### BACKGROUND

Grass mowing machines, or mowers, may include multiple cutting units. Each cutting unit may have at least one reel with bed knife and/or deck with rotary blade that is configured to cut grass. In some machines, the cutting units may be offset or staggered such as in front-to-rear and/or side-to-side directions. Such machines may be used to cut any grass, including but not limited to grass wherein a high quality of cut is desired. Such locations may include, but are not limited to, golf courses, parks, and athletic fields.

### SUMMARY

In one aspect of the invention, a mower is provided having a first cutting unit row including at least a first cutting unit that is movable between a plurality of first cutting unit positions and a second cutting unit row including at least a second cutting unit that is movable between a plurality of second cutting unit positions, and wherein the first and second cutting units are staggered. A controller includes at least one memory and at least one processor. The controller may be operable to detect a request to move the first and second cutting units to different cutting unit positions, command the first cutting unit to move to the different first cutting unit position, determine a distance traveled by the mower after the first cutting unit is moved to the different first cutting unit position, and command the second cutting unit to move to the different second cutting unit position such that an approximately straight mow line is created across a total desired cutting width of the mower.

The mower may also include one or more ground engaging members and one or more ground engaging member speed sensors, and the ground engaging member speed sensors may be in communication with the controller to communicate ground engaging member speed information to the controller. The controller may be operable to use the ground engaging member speed information to determine a distance traveled by the mower after the first cutting unit is moved. The communication between the ground engaging member speed sensor and the controller may be via an inverter.

The mower may further include one or more ground engaging member motors, wherein each ground engaging member motor may drive at least one ground engaging member. The ground engaging member speed sensor may detect ground engaging member motor information from the grounding engaging member motor. The mower may include least one of a motor and an actuator to move the first and second cutting units between the pluralities of positions. The mower may also include an inverter associated with each of the plurality of cutting unit motors and the inverter may communicate with the controller.

In another aspect of the invention, a mower is provided having first and second cutting rows that include at least a first cutting unit and a second cutting unit, respectively. The cutting units may be movable between a plurality of cutting unit positions and may be located a first distance from each other in the longitudinal direction. A controller including at least one memory and one processor may be operable to detect a request to start or stop cutting grass; command the first cutting unit to start or stop cutting grass consistent with the detected request, determine the distance traveled by the mower after the first cutting unit has either started or stopped cutting grass consistent with the detected request, and command the second cutting unit to either start or stop cutting grass consistent with the detected request when the mower has traveled a distance approximately equal to the first distance.

In yet another aspect of the invention, a computer-implemented method is provided. The method may include detecting a request to move first and second cutting units to a different position. The first row of one or more cutting units may be commanded to move. A distance traveled by the mower may be determined. Movement of the second row of one or more cutting units may be commanded such that an approximately straight mow line is created across a total desired cutting width of the mower.

### BRIEF DESCRIPTION OF THE DRAWINGS

The detailed description of the drawings refers to the accompanying figures.
FIG. 1 is a perspective view of an implementation of a grass mowing machine of the present invention.
FIG. 2 is a side elevation view of the grass mowing machine of FIG. 1.
FIG. 3 is a schematic of at least a portion of a grass mowing machine of the present invention.
FIG. 4 is a flow chart of a method of the present invention.

Like reference numerals are used to indicate like elements throughout the several figures.

### DETAILED DESCRIPTION

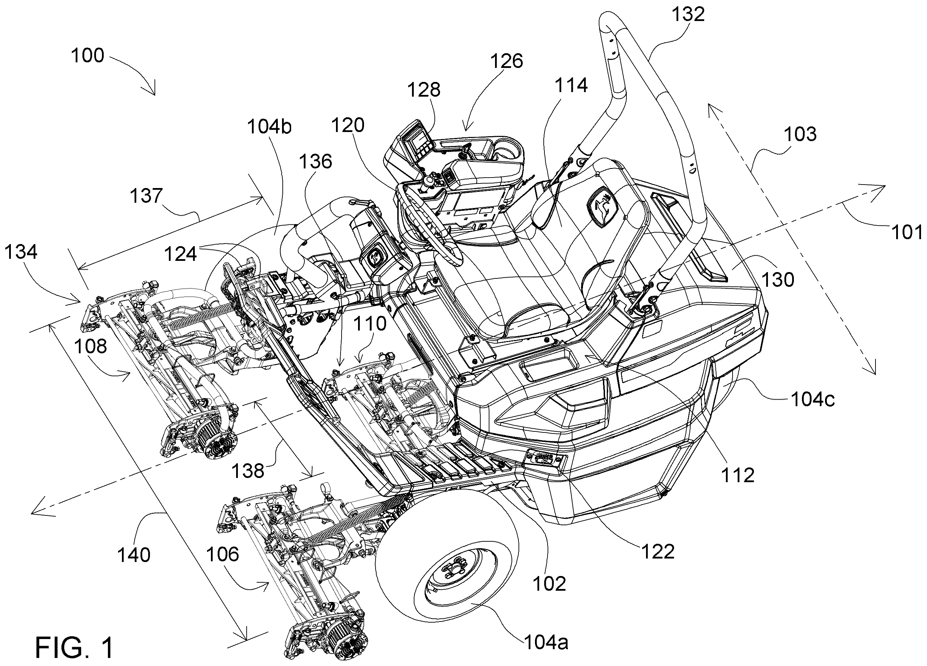

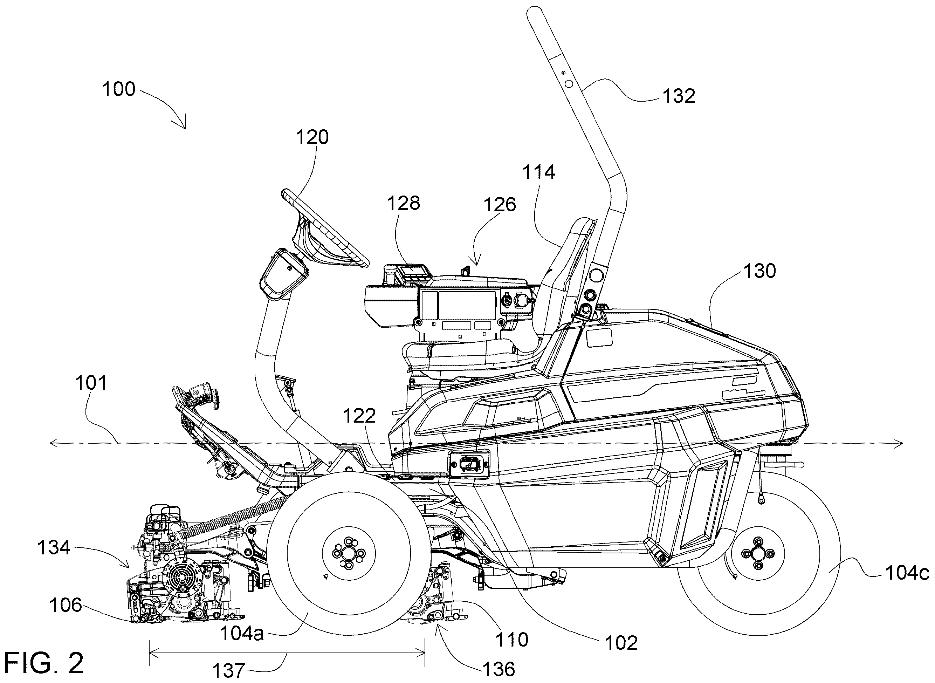

Referring to FIG. 1, an implementation of a grass mowing machine or mower 100 of the present invention is provided. The mower 100 may include a frame 102 (best shown in FIG. 2) supported by one or more ground engaging members 104. The illustrated implementation shows three ground engaging members 104a, 104b, 104c. Two ground engaging members 104a, 104b are illustrated as two front wheels, while the third ground engaging member 104c is illustrated as a rear wheel. The mower may include a longitudinal axis 101 which defines a front-to-rear direction of the mower 100. Perpendicular to the longitudinal axis 101 may be a side-to-side direction 103. Extending from the frame may be a plurality of cutting units. Cutting units may include, but are not limited to, mowing reels and mowing decks. In the illustrated implementation, three reel cutting units are shown: 106, 108, 110. Any number of a plurality of cutting units may be used without departing from the scope of the invention.

The mower 100 may further include an operator station 112. In the illustrated embodiment, the operator station 112 includes a seat 114, a steering wheel 120, a foot platform 122, and one or more foot pedals 124. The operator station 112 may further include a console 126. Console 126 may include a display 128. In some implementations, operator station 112 may further include one or more operator inputs and/or comfort features. In other, non-illustrated embodiments, the operator station may exclude a seat and be designed for an operator to stand on the operator station and/or walk behind the operator station. In some implementations, one or more control levers may be used to steer the machine, such as in a zero-turn radius ("ZTR") machine. In other implementations, an operator station may be omitted from the mower entirely. The mower 100 may include a hood 130 to cover a plurality of parts. The mower 100 may further include a rollover protection system ("ROPS") 132. The mower may include a power source (not shown), such as under the hood. The power source may be any type suitable for powering the mower. Examples may include, but are not limited to, an internal combustion engine, one or more batteries, and a hybrid engine.

As noted above, the mower 100 may include a plurality of cutting units, such as the illustrated reel cutting units. The illustrated implementation is a triplex greensmower, which includes three reel cutting units 106, 108, 110. Any number of a plurality of cutting units may be used without departing from the scope of the invention, including but not limited to, two, three, four, five, six, seven, eight, nine, or ten cutting units. Moreover, cutting units may be any type, including but not limited to cutting reels and cutting decks. In addition to the illustrated triplex greensmower, other exemplary mowers wherein the invention may be implemented include, but are not limited to, fairway mowers and rough mowers, such as those having five cutting units.

Each cutting unit 106, 108, 110 may extend from frame 102 via a lift mechanism that enables each cutting unit 106, 108, 110 to be movable between a plurality of positions, such as at least one cutting position and at least one non-cutting position. For example, a non-cutting position may include a transport position. In one example of an implementation, each cutting unit 106, 108, 110 is operably connected to one or more lift arms as described in United States Patent Application Publication No. 2023/0095360, the entire contents of which are hereby incorporated by reference. In other examples of implementations, movement of cutting units may be via any type of one or more actuators, including but not limited to one or more rotary actuators and/or one or more linear actuators, and/or one or more hydraulic lifts. Any mechanism to move cutting units between a plurality of positions may be used without departing from the scope of the invention.

Mower cutting units may be arranged in a plurality of rows. Referring to FIG. 2, in the illustrated implementation, cutting units 106, 108, 110 are arranged in a first row 134 and a second row 136. First row 134 and second row 136 may be located a first distance 137 from each other in the longitudinal direction. First row 134 includes cutting units 106 and 108, which are illustrated further forward (referring to the forward direction of travel) than the second row 136 which includes cutting unit 110. First and second rows 134, 136 can also be seen in FIG. 1. As shown in FIG. 1, gap 138, which extends a second distance in the side-to-side direction, is between cutting unit 106 and cutting unit 108. Gap 138 results in uncut grass between cutting unit 106 and 108. Cutting unit 110 in second row 136 serves to cut the grass in gap 138. The result is mowing the total cutting width 140 of the illustrated mower 100 in a single pass. As will be understood by one of skill in the art, in mowers having other than three cutting units, different configurations of rows may be used. For example, in a mower having five cutting units, three cutting units may be located in a first row, and two cutting units may be located in a second row. The row with three cutting units may include two gaps, which are mowed by the second row cutting units to result in mowing grass across the total cutting width of the mower in a single pass. Moreover, any number of a plurality of cutting unit rows may be used without departing from the scope of the invention, including but not limited to two, three, four, five, six, seven, eight, nine, or ten cutting unit rows. In one or more implementations of mowers, less than all of the cutting units may be used in a particular mowing pass. In one example of such an implementation, one or more cutting units may be wing cutting units that may be disengaged during a mowing operation. As such, in some implementations, a total desired cutting width may be less than the total cutting width of mower.

As noted above, the illustrated mower 100 is a triplex greensmower for use on a golf course green. Most mowing operations will require the cutting units to start and stop mowing at one or more particular locations, such as at the edge of a green for the illustrated triplex greensmower. In some implementations, it is desirable for all cutting units to start and stop mowing in the same location on the grass, such that an approximately consistent or straight mow line is created versus a staggered or offset line. In other words, it may be desirable for all cutting to units to start and stop mowing in the same horizontal line, such that an approximately consistent or straight mow line is created. The present invention provides apparatuses, methods, and systems for distance-based front-to-rear timing on cutting units.

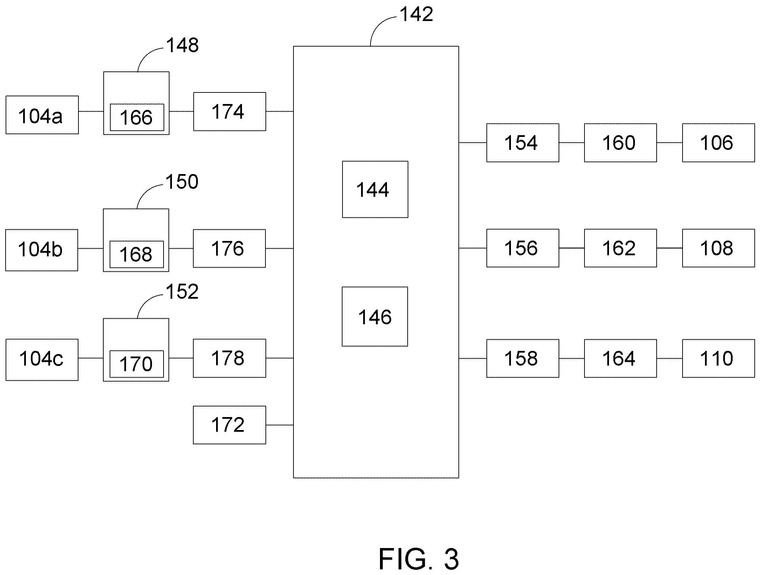

Referring to FIG. 3, a schematic of at least a portion of an exemplary implementation of a mower 100 of the present invention is shown. Shown is controller 142 which includes at least one memory 144 and at least one processor 146. The memory 144 and the processor 146 may be communicatively coupled. The memory 144 communicates with the processor 146 and is used to store programs and other software and information (such as in the form of data or instructions). The processor 146 is operable to execute programs and software and receive information and send information to the memory 144. Although a single memory 144 and a single processor 146 are illustrated, in some implementations, a plurality of memories, processors, or both may be used. Although the processor 146 and memory 144 are shown as being local components of the controller 144, one or both of the processor 146 and memory 144 may be located remotely. Controller 144 may be configured to perform a variety of computer-implemented functions, including those described herein.

Connected to and/or in communication with controller are motors 148, 150, 152. Motors 148, 150, 152 are operably connected to wheels 104a, 104b, and 104c, respectively to drive motion of same. Each motor 148, 150, 152 may include a sensor 166, 168, 170, respectively, which will be described in further detail below. Also connected to controller 142 is at least one user input to start and/or stop cutting grass. In the illustrated implementation, the at least one user input to start and/or stop cutting grass is a raise and/or lower input 172. In the illustrated implementation, motors 160, 162, 164 are operably connected to cutting units 106, 108, 110, respectively. Motors 160, 162, 164 are connected to and/or in communication with controller. In some implementations, motors 160, 162, 164 are directly connected to and/or in communication with controller 142. In the illustrated implementation, motors 160, 162, 164 are connected to and in communication with controller via inverters 154, 156, 158.

Motors 148, 150, 160 are operably connected to wheels 104a, 104b, 104c to drive wheels and move mower 100. Sensors 166, 168, 170 may be configured to detect information related to the velocity of the respective wheel with which it is associated. Any type of motor 148, 150, 160 and/or sensor 166, 168, 170 may be used. In some implementations, motors 148, 150, 160 may each be an electric motor. In some implementations, sensor 166, 168, 170 may be an encoder, such as a quadrature encoder. In one or more examples of implementations, the sensors 166, 168, 170 may each be configured to detect and/or measure the number of wheel rotations, such as over a period of time. For example, the wheel motors 148, 150, 160 may provide a signal, such as a pulse, as the motor operates to rotate the wheel. The number of signals per complete rotation of the wheel may be known to the controller, such as by operator input or initial machine configuration during manufacturing. The sensors 166, 168, 170 may detect the number of signals from their respective motor 148, 150, 160. The sensor may then communicate this information to controller 142. Controller 142 may determine the distance each wheel 104a, 104b, 104c has travelled. To determine the distance each wheel has travelled, controller 142 may use the measured number of signals from sensor 166, 168, 170 along with the gear ratio and/or distance per revolution. Gear ratio may be a known value that is constant to the machine, and which is inputted into the mower 100, such as the controller 142, during manufacturing. Distance per revolution refers to the distance a wheel 104a, 104b, 104c will travel during a complete revolution of same. Such a distance may also be inputted into the mower 100, such as the controller 142, during manufacturing. Alternatively, one or both values may be changeable by an operator, such as via inputs at operator station 112. As such, the controller 142 may be configured to determine the distance traveled by each wheel 104a, 104b, and/or 104c per signal detected by sensor 166, 168, and/or 170.

In one or more implementations, sensors 166, 168, 170 communicate directly with controller 142. In the illustrated implementation, sensors 166, 168, 170 communicate with inverters 174, 176, 178 which then communicate with controller 142. Inverters 174, 176, 178 provide motors 148, 150, 152 with power to move, such as from a power source (not shown).

In the illustrated implementation, a sensor is associated with each ground engaging member, such as a wheel. However, in some implementations, fewer sensors may be used. For example, the speed of only one ground engaging member may be sensed or the speed of only two ground engaging members may be sensed. Moreover, in some implementations, more or fewer ground engaging members may be included on a mower of the present invention. Any number of ground engaging members and sensors may be used without departing from the scope of the invention. Moreover, the illustrated implementation includes a motion generation source, such as a motor, associated with each ground engaging member. However, any number of motion generation sources may be used, and any number of ground engaging members may be associated with a motion generation source.

Inverters 154, 156, 158 may provide motors 160, 162, 164 with power, such as from a power source. Moreover, inverters 154, 156, 158 may be in communication with controller 142. Operation of motors 160, 162, 164 serves to raise and/or lower cutting units 106, 108, 110, such as between cutting and transport positions. Alternatively, motors 160, 162, 164 may be in direct communication with controller 142. Moreover, in some implementations, one or more mechanisms other than motors may be used to raise and/or lower cutting units. For example, one or more actuators, including but not limited to rotary actuators and/or linear actuators, and/or hydraulic lifts may be used.

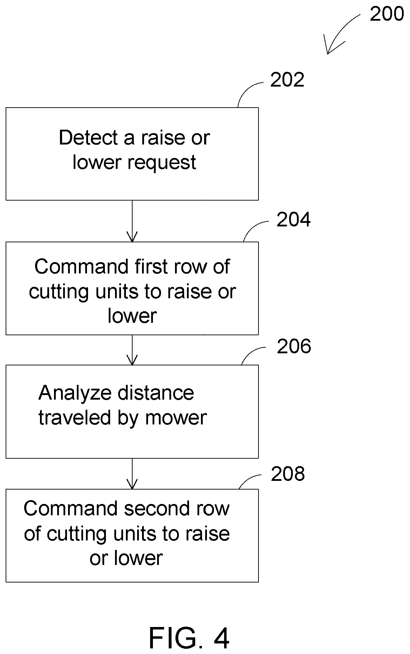

Also provided are methods of starting and/or stopping the mowing of grass by the cutting units. In one implementation of a method of the present invention, a start and/or stop request is detected, such as by controller. A start and/or stop request may be from any source, such as a user-inputted request, the mower itself, or a remote source. A first cutting unit may be commanded to start or stop cutting grass, consistent with the request. The distance traveled by the mower after the first cutting unit is commanded to start or stop cutting grass is analyzed, such as by controller. The second cutting unit may be commanded to start or stop cutting grass, consistent with the request, after the mower has traveled a distance such that an approximately straight mow line is created across a total desired cutting width of the commanded cutting units. In one or more implementations, a request to start and or stop cutting grass by the cutting units may be a request to lower and/or raise the cutting units. In one or more implementations, cutting units may be in a grass cutting position in one or more lowered positions and in a transport position in one or more raised positions. Referring to FIG. 4, shown is a method 200 of raising and lowering cutting units on a mower having multiple rows of cutting units. In one or more implementations of such a method, the mower may have a plurality of staggered cutting units. One objective of such a method may be to create a mow line across the total desired cutting width of the mower that is as straight as possible in the horizontal direction. In a first step of such a method, a request to raise or lower the cutting units may be detected, as shown in block 202. Such a raise or lower request may be inputted by a user, such as via a user input at the operator station. In one or more examples of implementations, a user input may be a switch, joystick, button, foot pedal, touch screen, or any other type of user input where a user may indicate a request to raise and/or lower the cutting units. Moreover, in some implementations, such a request may be machine-generated, such as in the case of an autonomous mowing machine.

In another step of the method 200, the first row of one or more cutting units may be commanded to raise or lower consistent with whether the detected request was a raise request or a lower request. Such a step is shown in block 204 of FIG. 4. Such a command may be carried out by controller 142. As shown in the exemplary illustration of FIG. 3, raising and lowering of cutting units 106, 108, 110 may be via inverters 154, 156, 158 and motors 160, 162, 164. In other implementations, raising and lower of cutting units 106, 108, 110 may be via motors only and/or actuators which are in direct communication with controller 142.

Method 200 may also include analyzing the distance traveled by mower, as shown in block 206. As noted above, in one or more implementations, analyzing the distance traveled by mower may include one or more wheel sensors 166, 168, 170. In one or more implementations, wheel sensors 166, 168, 170 may detect one or more signals from motors 148, 150, 152, respectively. The number of signals may be communicated to controller 142. Controller 142 may also have inputs and/or stored information in memory 144 related to a wheel's gear ratio and/or distance per revolution. Moreover, controller 142 may also have inputs and/or stored information in memory 144 related to the distance between the cutting units in the first row and the cutting units in a second row, also referred to as a first distance 137. As such, controller 142 may determine the distance traveled by a wheel 104a, 104b, 104c.

In some implementations, determination of distance traveled may not be so directly computed by controller 142. In one or more implementations, communication between one or more sensor(s) 166, 168, 170 may be via inverters 174, 176, and/or 178. In one or more implementations, the integral of the velocity with respect to time is used to determine the distance traveled. The following equation is representative: s(t) = ∫v(t)dt. In such an equation, s(t) is the linear distance traveled; v(t) is the velocity; d is the distance traveled, and t is time. In such an implementation, sensor 166, 168, 170 and/or inverter 174, 176, 178 may communicate the value for velocity only to controller 142 rather than the distance and/or number of signals to calculate the distance. In such a case, the controller 142 may use this equation to determine the distance traveled by the machine. A different mathematical process may be used without departing from the scope of the invention.

Distance traveled may be analyzed based on one or more ground engaging member speeds. In some implementations, all ground engaging members will be associated with a sensor to provide information for analysis 206. In some implementations fewer than all ground engaging members may be associated with sensors. In some implementations, more than one ground engaging member may be associated with the same sensor, such as in implementations where a single motion generation source is associated with more than one ground engaging member. Moreover, in implementations where a plurality of ground engaging member sensors is used, analysis 206 may average the information received from each to determine the distance traveled.

Referring again to FIG. 4, in another step 208 of method 200, the second row of one or more cutting units may be commanded to raise and/or lower consistent with the request detected in step 204. In one or more implementations, the rear cutting unit may be lowered at or near the same horizontal location as the front cutting units. For example, in one or more implementations, the rear cutting unit may be lowered at approximately the same horizontal or side-to-side location or as close to the same horizontal or side-to-side location as possible create a straight, even mow line across the total desired cutting width.

The above method allows for changes in mower velocity to be included in the determination of when to lower or raise the second row cutting unit(s). Previous methods use a fixed time dependent on vehicle velocity beginning at the time when the raise or lower request is detected. However, because the prior methods use a fixed time, if the mower velocity changes, the second cutting unit row is not moved at the appropriate time, resulting in a mow line that is not straight. In other words, the second row cutting unit(s) are not raised and/or lowered at the same horizontal location as the first row cutting units. However, methods of the current invention determine when to command the second row to raise and/or lower based on the distance traveled by the machine. Changes in velocity are part of the analysis to provide accuracy.

Although various representative embodiments of this invention have been described above with a certain degree of particularity, those skilled in the art could make numerous alterations to the disclosed embodiments without departing from the spirit or scope of the inventive subject matter set forth in the specification and claims. Joinder references (e.g. attached, adhered, joined, connected) are to be construed broadly and may include intermediate members between a connection of elements and relative movement between elements. As such, joinder references do not necessarily infer that two elements are directly connected and in fixed relation to each other. In some instances, in methodologies directly or indirectly set forth herein, various steps and operations are described in one possible order of operation, but those skilled in the art will recognize that steps and operations may be rearranged, replaced, or eliminated without necessarily departing from the spirit and scope of the present invention. It is intended that all matter contained in the above description or shown in the accompanying drawings shall be interpreted as illustrative only and not limiting. Changes in detail or structure may be made without departing from the spirit of the invention as defined in the appended claims.

## Claims

1. A mower (100) comprising:
a first cutting unit row (134) including at least a first cutting unit (106, 108), said first cutting unit (106, 108) movable between a plurality of first cutting unit positions;
a second cutting unit row (136) including at least a second cutting unit (110), said second cutting unit (110) movable between a plurality of second cutting unit positions, and wherein said first and second cutting units (106, 108, 110) are staggered;
a controller (142) including at least one memory (144) and at least one processor (146), said
controller (142) operable to:
detect a request to move said first and second cutting units (106, 108,110) to different first and second cutting unit positions;
command said first cutting unit (106, 108) to move to said different first cutting unit position;
determine a distance traveled by said mower (100) after said first cutting unit (106, 108) is moved to said different first cutting unit position; and
command said second cutting unit (110) to move to said different second cutting unit position such that an approximately straight mow line is created across a total desired cutting width (140) of said mower (100).

2. The mower (100) of claim 1, further comprising one or more ground engaging members (104).

3. The mower (100) of claim 2, further comprising one or more ground engaging member speed sensors (166, 168, 170).

4. The mower (100) of claim 3, wherein said ground engaging member speed sensors (166, 168, 170) are in communication with said controller (142) to communicate ground engaging member speed information to said controller (142) and wherein said controller (142) is operable to use said ground engaging member speed information to determine the distance traveled by said mower (100) after said first cutting unit (106, 108) is moved to said different first cutting unit position.

5. The mower (100) of claim 4, wherein said communication between said ground speed engaging member speed sensor (166, 168, 170) and said controller (142) is via an inverter (174, 176, 178).

6. The mower (100) of one of the claims 2 to 5, further comprising one or more ground engaging member motors (148, 150, 160), wherein each ground engaging member motor (148, 150, 160) drives at least one ground engaging member (104).

7. The mower (100) of claim 6, wherein said ground engaging member speed sensor (166, 168, 170) detects ground engaging member motor information from said ground engaging member motor (148, 150, 160).

8. The mower (100) of one of the claims 1 to 7, further comprising at least one of a motor (160, 162, 164) and an actuator to move said first and second cutting units (106, 108, 110) between said plurality of positions.

9. The mower (100) of claim 8, comprising a first cutting unit motor (160, 162) for moving said first cutting unit (106, 108) and a second cutting unit motor (164) for moving said second cutting unit (110).

10. The mower (100) of claim 8 or 9, further comprising an inverter (154, 156, 158) associated with each of said plurality of cutting unit motors (160, 162, 164) and wherein said inverter (154, 156, 158) communicates with said controller (142).

11. A method (200) of controlling a mower (100), comprising a mower (100) according to one of the claims 1 to 10, wherein the mower (100) further comprises a longitudinal direction (101) and a horizontal direction (103), wherein said first and second cutting units (106, 108, 110) are located a first distance (137) from each other in said longitudinal direction (101), the method (200) further comprising steps to:
detect a request to start or stop cutting;
command said first cutting unit (106, 108) to start or stop cutting consistent with the detected request;
determine a distance traveled by said mower (100) after said first cutting unit (106, 108) has either started or stopped cutting consistent with the detected request; and
command said second cutting unit (110) to either start or stop cutting consistent with the detected request when said mower (100) has traveled a distance approximately equal to said first distance (137).

12. The method (200) of claim 11, wherein said command to said first cutting unit (106, 108) to start or stop cutting is a command (204) to move said first cutting unit (106, 108) to a different first cutting unit position and said command to said second cutting unit (110) to start or stop cutting is a command (208) to move said second cutting unit (110) to a different second cutting unit position.

13. The method (200) of claim 11 or 12, further comprising the ground engaging member speed sensor (166, 168, 170) to detect and communicate information related to a ground engaging member speed.

14. The method (200) of one of the claims 12 to 13, further comprising at least one user input (172) receiving a request from a user to move said first and second cutting units (106, 108, 110) to a different of said plurality of first and second cutting unit positions.

15. The method (200) of one of the claims 12 to 14, wherein said controller (142) commands said first and second cutting units (106, 108, 110) to move to said different first and second cutting unit positions such that an approximately straight mow line is created across a total desired cutting width (140) of said mower (100).
